Europäisches Patentamt

(19) European Patent Office

Office européen des brevets

(11) Publication number : **0 277 172 B1**

# (12) EUROPEAN PATENT SPECIFICATION

(45) Date of publication of patent specification :
09.10.91 Bulletin 91/41

(21) Application number : 87905039.1

(22) Date of filing : 08.07.87

(86) International application number :
PCT/US87/01616

(87) International publication number :
WO 88/00706 28.01.88 Gazette 88/03

(51) Int. Cl.⁵ : **G01N 35/04**

(54) SAMPLE LOADING APPARATUS.

(30) Priority : 11.07.86 US 884463

(43) Date of publication of application :
10.08.88 Bulletin 88/32

(45) Publication of the grant of the patent :
09.10.91 Bulletin 91/41

(84) Designated Contracting States :
DE GB IT

(56) References cited :
WO-A-83/00393
FR-A- 2 280 894
US-A- 3 589 867

(73) Proprietor : BECKMAN INSTRUMENTS, INC.
2500 Harbor Boulevard
Fullerton, CA 92634 (US)

(72) Inventor : BARKER, Stephen, F.
4361 East Mission Boulevard 186
Pomona, CA 91766 (US)
Inventor : FECHTNER, Harold, F.
874 Butte Street
Claremont, CA 91711 (US)

(74) Representative : Arthur, John William et al
FITZPATRICKS 4 West Regent Street
Glasgow G2 1RS Scotland (GB)

# Description

## FIELD OF THE INVENTION

The present invention relates to the field of automated clinical analyzers and more particularly to a sample loading and unloading apparatus for use in and with such analyzers.

## BACKGROUND OF THE INVENTION

Automated clinical analyzers are used in clinical chemistry laboratories to automatically process patient samples, determining the presence and/or concentration of various analytes in such samples. The degree of automation of such analyzers varies from instruments that simply automatically measure the concentration of a single sample placed in the instrument to systems that automatically process a large number of samples loaded onto the system by an operator.

System throughput, that is, the number of samples that can be analyzed per unit time, is an important consideration in automated systems. One of the factors affecting system throughput is the manner in which samples are loaded onto the system for analysis and removed from the system once the required analysis is completed. If the system must wait while an operator loads or removes samples, system throughput can be correspondingly affected. Thus, it is known in the art to utilize some mechanism or method which reduces the amount of time that a system must wait while an operator loads and unloads samples.

One approach is to place a number of individual samples onto a single turntable, such as is done on the Astra® Analyzer manufactured by Beckman Instruments Inc., Brea, California. The single turntable is then loaded onto the analyzer, a simple operation that helps to minimize the amount of time that the analyzer is idle. When all of the samples on the turntable have been analyzed, the entire turntable can be removed and replaced with another turntable holding samples requiring analysis. Although this technique has been found to be effective, it does require that the entire sample turntable be placed onto or removed from the analyzer at one time, regardless of the number of samples that are on the turntable. Thus, the amount of time that the analyzer operation is interrupted to load a turntable is the same whether or not the turntable is filled or has only a few samples.

Another approach is illustrated by the Paramax® Analytical System from American Dade. In The Paramax system, individual sample test tubes are loaded onto a loading carousel which is in turn loaded onto the system, similar to the Astra System just described. The sample test tubes are moved by an automatic transfer mechanism onto a transfer carousel where sample volumes are withdrawn and transferred to analysis cuvettes. The sample test tubes are then moved from the transfer carousel by another automatic transfer mechanism to an unloading carousel where they may then be unloaded by the system operator.

The Paramax system suffers from the same disadvantages noted above, namely that individual samples are loaded onto a large volume carousel and the carousel is then loaded onto the system. Thus, the versitility of the system is reduced. Furthermore, the Paramax system requires two automated sample handling mechanisms, each of which must handle individual glass sample test tubes, increasing the cost and complexity of the system.

Thus there is a need for a sample loading system that overcomes the limitations described above, making it easy and quick to load samples onto an automated analyser without interrupting analyser operation. There is also a need for a sample loading system that allows for the easy introduction of a limited number of samples onto the analyser without placing the samples onto a large capacity turntable or carousel.

## SUMMARY OF THE INVENTION

The present invention overcomes the limitations described above, providing an adaptable, versatile, and simple sample loading system. The analyser need not wait while sample loading or unloading is done and thus analyser throughput is not affected.

In accordance with the invention, a sample loading and unloading apparatus for use with sample carrying means each adapted to carry one or more samples, the apparatus comprises:

a loading tray including a plurality of locations each adapted to receive a sample carrying means;

a sample carousel disposed proximate the loading tray and including a plurality of locations each adapted to receive a sample carrying means, the portion of the sample carousel proximate the loading tray defining a transfer position (as is known from WO-A-83/00393, wherein separate loading and storage carousels are disposed adjacent a sample carousel); characterised in that said sample carrying means comprises sample carrying sectors adapted to receive a plurality of samples and in that means are provided for transferring a sample carrying sector positioned at the transfer position from the sample carousel to the loading tray and simultaneously transferring a sample carrying sector from the loading tray to the sample carousel at the transfer position, such that the loading tray serves for both the loading and storage of the sample sectors.

The apparatus may further include means for removeably securing the sectors positioned on the loading tray and the sector positioned at the transfer position to a transfer member and means for elevating and rotating the transfer member. The means for elevating and rotating the transfer member may include a pneumatic piston within a cylinder and a motor for rotating the transfer member.

BRIEF DESCRIPTION OF THE DRAWINGS

Figure 1 is a perspective view of a sample loading apparatus in accordance with the present invention.

Figure 2 is a cross-section view of the apparatus of Figure 1 taken along the section planes 2-2 thereof.

DETAILED DESCRIPTION

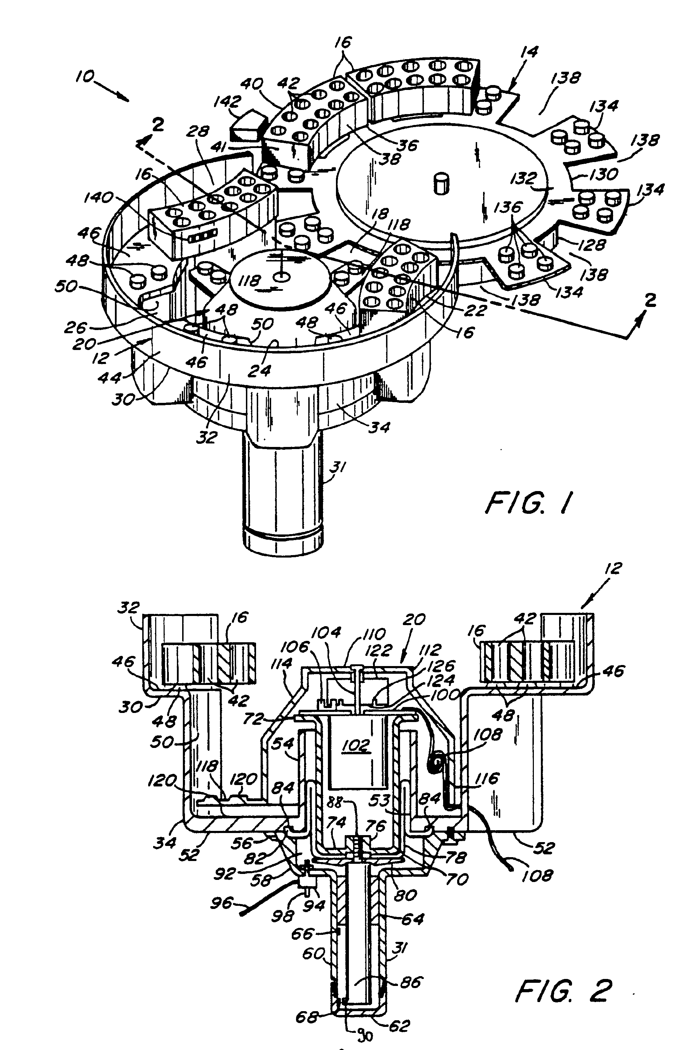

With reference to Figure 1 a sample loading apparatus 10 in accordance with the present invention may be carried by an automated clinical analyzer of the type known in the art and includes a loading tray 12 and a sample carousel 14. Briefly, the loading tray 12 is adapted to receive and carry four sample carrying sectors 16 and the sample carousel 14 is adapted to receive and carry eight sample sectors 16. The portion of the sample carousel 14 nearest the loading tray 12 is defined as a transfer position 18.

The loading tray 12 includes a transfer assembly 20. The transfer assembly 20 lifts the sample sector 16 disposed at the transfer position 18 and all of the sample sectors 16 disposed on the loading tray 12 up above other sample sectors 16 disposed on the sample carousel 14. With the sample sectors 16 lifted, the transfer assembly 20 rotates the sample sectors 16 one position clockwise as seen in Figure 1. Thus, the sample sector 16 disposed at the transfer position 18 moves to a first loading position 22, the sample sectors 16 disposed at second and third loading positions 24 and 26 are incremented one loading position clockwise about the periphery of the loading tray 12, and the sample sector 16 disposed at a fourth loading position 28 moves to the transfer position 18. The transfer assembly 20 then lowers the sample sectors 16 onto the loading tray 12 and the sample carousel 14 at the transfer position 18.

The sample carousel 14 may rotate while sample sectors 16 are being placed onto and removed from the loading tray 12 by the analyzer operator. Also, the load/unload or transfer cycle just described can be timed to occur during a portion of the automated analyzer operating cycle that does not require rotation of the sample carousel or access to samples carried by the sector 16 positioned at the transfer position 18. Both of these factors enable the apparatus 10 to enhance analyzer throughput.

Turning now to a more detailed description of the apparatus 10, the loading tray 12 includes a housing generally designated 30 and a support tube 31. The housing 30 includes an upper portion 32 adapted to receive and support four sample sectors 16 and a lower portion 34 adapted to accommodate the transfer assembly 20 in its retracted or lowered position. The upper portion 32 defines the first through fourth loading positions 22-28 spaced around the periphery of the upper portion 32.

In the embodiment disclosed herein, each of the sample sectors 16 includes an arcuate body 36 including a first arcuate vertical surface 38, a second longer arcuate vertical surface 40, and vertical end surfaces 41 connecting the surfaces 38 and 40. As so configured, the arcuate bodies 36 of eight sample sectors 16, when placed about the periphery of the sample carousel 14, form a segmented annular assembly. Each of the sample sectors 16 includes ten openings 42 formed vertically therethrough parallel to the first and second arcuate surfaces 38 and 40. The openings 42 are adapted to receive sample cups (not shown) which in turn are adapted to receive fluid samples. The openings 42 are arranged in two arcuate rows of five openings 42 each, a first row thereof nearest to the first arcuate surface 38 and a second row thereof nearest to the second arcuate surface 40.

Continuing now with the loading tray 12, the upper portion 32 thereof includes a vertical wall 44 (Figures 1 and 2) extending around approximately three-quarters of the periphery of the upper portion 32. The wall 44 extends slightly above the top of sample sectors 16 disposed on the loading tray 12. Five horizontal platforms 46 are formed at the base of the wall 44, the platforms 46 extending inwardly toward the center of the loading tray 12. The platforms 46 provide support surfaces for sample sectors 16 disposed within the loading tray 12 at loading positions 22-28. More particularly, each of the loading positions 22-28 includes two platforms 46 upon which the opposite ends of a sector 16 may rest. Furthermore, the platforms 46 include cylindrical upward projections 48 adapted to engage the openings 42 at both ends of sectors 16 disposed in the loading positions 22-28.

The lower portion 34 of the housing 30 is formed to define wells 50 between adjacent ones of the projections 48. The tops of the wells 50 define openings in each of the loading positions 22-28 beneath sample sectors 16 which may be disposed at such positions. A bottom horizontal wall 52 includes a circular opening 53 therethrough coaxially aligned with the central axis of the loading tray 12. The bottom wall 52 defines the bottoms of the wells 50. The opening 53 terminates in a vertical inner cylindrical wall 54 which extends upwardly approximately two-thirds the height of the wells 50.

The support tube 31 includes a horizontal flange 56 at the top thereof, the flange 56 being fixed to the lower surface of the bottom wall 52. The support tube 31 also includes a bell portion 58 fixed to the flange 56. The bell portion 58 extends downwardly and inwardly to join a vertical cylinder 60. The vertical cylinder 60 extends downwardly from the bell portion 58 and includes a closing bottom member 62. For example, the closing bottom member 62 may comprise a cap secured to the vertical cylinder 60 with an O-ring seal therebetween. Disposed within the vertical cylinder 60 is a linear bearing 64 near the upper end of the vertical cylinder 60 proximate the bell portion 58. Disposed immediately beneath the bearing 64 is a Hall effect magnetic detector 66. A second Hall effect detector 68 is aligned with the detector 66 and is fixed inside the vertical cylinder 60 proximate the closing bottom member 62. The detectors 68 are connected through the housing to external circuitry (not shown) which controls the apparatus 10 as is described hereinbelow.

The transfer assembly 20 includes pneumatic lifting means for providing upward and downward movement of the assembly 20. More particularly, the transfer assembly 20 includes a generally cup-shaped piston 70 having an annular outwardly extending lip 72 at the open upper end thereof. A bottom 74 of the piston 70 has a threaded boss 76 coaxially aligned with the central axis of the piston 70.

A flexible rolling seal such as a Bellofram Type ABC3-450-275-F is fixed between the piston 70 and the housing 30. The seal 78 is clamped to the bottom 74 of the piston 70 by means of a circular retainer plate 80 having a central opening therethrough aligned with the threaded opening in the boss 76. A bead 82 at the outer periphery of the seal 78 is disposed in an annular channel 84 formed into the bottom wall 52 concentric with the central axis of the loading tray 12. The bead 82 is clamped into the channel 84 between the flange 56 and the lower surface of the bottom wall 52.

A guide shaft 86, carried by the bearing 64, is disposed within the vertical cylinder 60. A threaded member 88 at the top of the guide shaft 86 is threaded into the boss 76 through the retainer plate 80, thus securing the retainer plate 80 to the bottom 74 of the piston 70. A magnet 90 is fixed at the lower end of the guide shaft 86 in alignment with the detectors 66 and 68.

The bottom wall 52, seal 78, retainer plate 80, and support tube 31 together define an enclosed air-tight cylinder or chamber 92 into which compressed air may be introduced via a valve 94. The valve 94 is a two-way electrically controlled valve which introduces compressed air delivered via a line 96 into the chamber 92 and, also under electric control, vents air within the chamber 92 to atmosphere through an outlet 98.

Fixed to the pneumatic lifting means just described is rotating means comprising a mounting plate 100 and a stepper motor 102. The mounting plate 100 is fixed atop the lip 72 and supports the stepper motor 102 within the piston 70. The stepper motor 102 includes a shaft 104 coaxially aligned with the piston 70. The mounting plate 100 also serves as an electrical connection point for the stepper motor 102 and a U-shaped position detector 106 comprising, for example, a light source and photodetector. Flexible conductors 108 connect the stepper motor 102 and detector 106 through the housing 30 to external circuitry (not shown). The external circuitry controls the stepper motor 102 in response to signals from the detector 106 as is described below.

The transfer assembly 20 also includes a transfer spider 110 affixed to the end of the stepper motor shaft 104. The upper portion of the transfer spider 110 defines a cylindrical inverted shallow cup 112. The lower outer edge of the cup 112 expands outwardly and downwardly to form a tapered portion 114. The tapered portion 114 joins to a vertical cylindrical portion 116 which terminates proximate the bottom wall 52 when the transfer assembly 20 is in its lowered or retracted position.

Five pickup members or arms 118 project horizontally outwardly from the lower edge of the cylindrical portion 116. With the transfer assembly 20 in its retracted position, four of the pickup arms 118 are disposed within the wells 50 with the fifth pickup arm 118 extending outwardly into the transfer position 18 and beneath the portion of the sample carousel 14 that carries the sample sectors 16. Each of the pickup arms 118 includes two cylindrical upward projections 120. The projections 120 are adapted to be received within the two middle or center openings 42 in sample sectors 16 positioned in the first through fourth loading positions 22-28 or in the transfer position 18.

The transfer assembly 20 also includes a position flag 122 in the form of an inverted cylindrical cup and fixed to the transfer spider 110. A lower outer edge 124 of the position flag 122 travels within the U-shaped position detector 106 and includes five notches 126. The notches 126 are detected by the detector 106 to indicate that the transfer assembly 20 is in one of five index positions wherein the pickup arms 118 are aligned with the wells 50.

With respect now to the sample carousel 14 as seen in Figure 1, the sample carousel 14 includes a base 128 to which is rotatably affixed a support ring 130. The support ring 130 is preferably driven by a stepper motor disposed in the base 128 and operated by control circuitry which also operates the stepper motor 102 and the valve 94. As seen with respect to Figure 1, a plane defined by the platforms 46 is somewhat above a plane defined by the support ring 130.

The support ring 130 comprises an inner annular member 132 and a plurality of radially projecting horizontal support arms 134. In the embodiment disclosed herein, the sample carousel 14 includes eight support arms 134. Each of the support arms 134 includes four cylindrical upward projections 136. Sample sectors 16 may be placed onto the support ring 130 such that the sectors 16 straddle adjacent support arms 134. A group of four projections 136 on such adjacent support arms 134 fit into the openings 42 at either end of a sector 16 to thus removably retain the sector 16 on the sample carousel 14. The support arms 134 define spaces 138 therebetween which are sized slightly larger than the pickup arms 118 so that the pickup arms 118 may pass through the spaces 138. With the transfer assembly 20 in its lowered or retracted position, the pickup arms 118 and projections 120 carried thereon are disposed in a plane below the plane defined by the support ring 130.

To identify sample sectors 16 carried on the the sample carousel 14, each of the sectors 16 may include a bar coded label 140 fixed to the second arcuate surface 40. The label displays a unique serial number for the sample sector 16 and may be read by a bar code reader 142. The reader 142 is positioned outside the periphery of the support ring 130 and is aligned with the labels 140 for sample sectors 16 disposed on the support ring 130. Preferably, the output of the bar code reader is applied to the same control circuitry which controls the loading tray 12 and sample carousel 14.

In operation, the support ring 130 and any sectors 16 disposed thereon are free to rotate on the base 128 while sample sectors 16 may be removed from and placed onto the loading tray 12 at any one of the loading positions 22-28. This freedom of rotation allows the analyzer to position samples on the sample carousel 14 as needed so that sample volumes may be withdrawn for analysis. Thus, as an operator loads or removes sample sectors 16 from the loading tray 14, the sample carousel 14 may be controlled independently to maximize analyzer throughput.

The next sector 16 to be loaded onto the sample carousel 14 during a transfer cycle performed by the apparatus 10 is disposed at the fourth loading position 28. A sector may be specifically disposed at the fourth loading position 28 by the analyzer operator for immediate loading onto the sample carousel 14. The ability to easily place a sample sector 16 at the fourth loading position 28 is particularly important where such a sector carries one or more samples that are to be analyzed as soon as possible.

Before a transfer cycle is initiated, the sector 16 to be transferred from the sample carousel 14 to the loading tray 12 during the cycle is first positioned at the transfer position 18 by rotating the support ring 130. Such a sector is hereinafter referred to as the unload sector. The unload sector may be one that carries samples that have been analyzed and thus need not remain on the sample carousel 14. Preferably, the support ring 130 is rotated to position the unload sector at the transfer position 18 immediately prior to a transfer cycle so as to not interfere with analyzer operation.

The transfer cycle begins as the valve 94 is controlled to admit air into the chamber 92. As the volume of compressed air in the chamber 92 increases, the transfer assembly 20 begins to rise. As the transfer assembly 20 rises, the pick up arm 118 at the transfer position 18 first engages the unload sector 16 and then the remaining pickup arms 118 engage sample sectors 16 disposed at the loading positions 22-28.

The transfer assembly 20 completes its vertical movement with the pickup arms 118 above the tops of any sample sectors disposed on the support ring 130. The motor 102 is controlled so as to rotate the transfer spider 110 clockwise as viewed from above in Figure 1. The rotation continues until the next notch 126 in the position flag 122 is detected by the position detector 106, indicating that the transfer spider 110 has reached the next index position. The stepper motor 102 is then de-energized and the transfer spider 110 comes to rest. The sample sector 16 that previously occupied the fourth loading position 28 is now positioned above the support ring 130 at the transfer position 18. Similarly, the unload sector 16 is now positioned above the first loading position 22 and sectors 16 previously disposed at the first through third loading positions 22-26 are positioned above the second through fourth loading positions 24-28.

The valve 94 is controlled to vent the compressed air within the chamber 92 through the outlet 98, lowering the transfer spider 110 and all sample sectors 16 carried thereby. Sample sectors first settle onto the loading tray as the pickup arms 18 fall below the platforms 46. Lastly, as the pickup arm at the transfer position 18 moves below the support ring 130, the sample sector 16 of the transfer position 18 is loaded onto the sample carousel 14.

The operation of the apparatus 10 does not require that a sample sector 16 be transferred from the tray 12 to the sample carousel 14 or that a sector 16 be transferred from the sample carousel 14 to the loading tray 12 with each cycle. For example, prior to a transfer cycle, a sample sector may be positioned at the fourth loading position 28 and there may be no sample sector 16 at the transfer position 18. After a transfer cycle as described above, the sector 16 previously located at the fourth loading position 28 is moved to the sample carousel 14 at the transfer position 18 and no sample sector 16 is then disposed at the first loading position 22. Similarly, the apparatus 10 may be used to remove a sector 16 positioned at the transfer position 18, moving such sample sector 16 to the first loading position 22, without concurrently moving a sample sector 16 from the fourth loading position 22 to the transfer position 18.

Thus, the apparatus 10 in accordance with the present invention allows sample sectors 16 to be placed onto or removed from the loading tray 12 without interrupting the operation of the associated clinical analyzer, increasing analyzer throughput. Furthermore, a transfer cycle may be performed while individual samples carried on the sample carousel are being pipetted by the automated analyzer to analysis stations, further enhancing the throughput of the analyzer.

It is to be recognized that equivalent embodiments of the present invention will be readily apparent to those skilled in the art and that the present invention is to be accorded the full scope of the claims appended hereto.

## Claims

1. A sample loading and unloading apparatus for use with sample carrying means each adapted to carry one or more samples, the apparatus comprising:

a loading tray (12) including a plurality of locations each adapted to receive a sample carrying means (16); and

a sample carousel (14) disposed proximate the loading tray and including a plurality of locations each adapted to receive a sample carrying means, the portion of the sample carousel proximate the loading tray defining a transfer position (18); characterised in that said sample carrying means comprises sample carrying sector (16) adapted to receive a plurality of samples and in that means (20) are provided for transferring a sample carrying sector (16) positioned at the transfer position (18) from the sample carousel (14) to the loading tray (12) and simultaneously transferring a sample carrying sector (16) from the loading tray (12) to the sample carousel (14) at the transfer position (18).

2. An apparatus as in claim 1, further including means (128, 130, 132) for supporting and rotating the plurality of locations in the sample carousel.

3. An apparatus as in claim 1 or claim 2, wherein the transferring means includes a transfer member (20) comprising means (120) for removably securing the sectors positioned on the loading tray (12) and the sector positioned at the transfer position to the transfer member and means for elevating (92, 94) and rotating (102) the transfer member.

4. An apparatus as in claim 3, wherein the elevating means is adapted to move the transfer member between a lowermost position beneath the plurality of locations of the loading tray and an uppermost position above the plurality of locations of the loading tray, and the rotating means is adapted to rotate the transfer member between index positions when the transfer member is in its uppermost position.

5. An apparatus as in claim 3 or claim 4, wherein the sample carousel is at least partly circular, and the locations each include support members (134) extending radially outwards from the sample carousel and adapted to receive and support the sectors, spaces (138) being defined between adjacent support members; wherein the loading tray locations include support surfaces (46) spaced around a common central axis and adapted to receive and support the sectors, spaces being defined between adjacent support surfaces, and the space defined between a first and a second of said support surfaces corresponding to said transfer position and being relatively larger than the remainder of the spaces between adjacent support surfaces; wherein the centre of the sample carousel and the central axis of the loading tray are horizontally displaced from one another such that the support members pass through said space corresponding to the transfer position as the carousel rotates; wherein the transfer member includes a plurality of arms(118) equal in number to the spaces between adjacent support surfaces of the loading tray and extending radially from the central axis of the loading tray between said adjacent support surfaces, the arms being smaller in width than the sample carousel spaces and the loading tray spaces; and wherein the elevating and rotating means includes means for elevating the arms through the spaces to a position above the sectors installed on the loading tray.

6. An apparatus as in claim 3, claim 4 or claim 5, wherein the means for elevating and rotating the transfer member includes a pneumatic piston (70), a cylinder (60) adapted to receive the piston, and a seal (78) therebetween.

7. An apparatus as in claim 6, wherein the means for elevating and rotating the transfer member includes means (92, 94, 96) for pressurising and depressurising the cylinder.

8. An apparatus as in any one of claims 3 to 7, wherein the sectors include recesses (42) formed therein and the loading tray locations and sample carousel locations each include projections (48, 136) adapted to be received by such recesses.

9. An apparatus as in claim 8, wherein the sample transfer member also includes projections (120) adapted to be received by said recesses.

10. An apparatus as in any one of claims 3 to 8, further including means (106) for indexing the rotation of the transfer member relative to the loading tray.

## Patentansprüche

1. Probenbeschickungs- und -entnahme-Apparatur zur Verwendung mit Probenträgervorrichtungen, die jeweils zur Aufnahme einer oder mehrerer Proben ausgebildet sind, wobei die Apparatur umfaßt:

ein Beschickungstablett (12) mit mehreren jeweils zur Aufnahme einer Probenträgervorrichtung (16) ausgebildeten Stationen, sowie

ein benachbart dem Beschickungstablett angeordnetes Probenkarussell (14) mit mehrerer jeweils zur Aufnahme einer Probenträgervorrichtung ausgebildeten Stellen, wobei der dem Beschickungstablett nächst benachbarte Bereich des Probenkarussells eine Überführungsstation definiert (18); dadurch **gekennzeichnet** , daß die genannte Probenträgervorrichtung jeweils einen zur Aufnahme mehrerer Proben ausgebildeten Probenträgersektor (16) aufweist und daß Mittel (20) vorgesehen sind, um einen in der Überführungsstation (18) positionierten Probenträgersektor (16) von dem Probenkarussell (14) in das Beschickungstablett (12) zu übertragen und gleichzeitig einen Probenträger-Sektor (16) von dem Beschickungstablett (12) auf das Probenkarussell (14) in der Überführungsstation (18) zu überführen.

2. Apparatur nach Anspruch 1, des weiteren umfassend Mittel (128,130,132), um die mehreren Stationen in dem Probenkarussell zu tragen und zu rotieren.

3. Apparatur nach Anspruch 1 oder Anspruch 2, bei welcher die Überführungsmittel ein Überführungsglied (20) aufweisen, welches Mittel (120) zur lösbaren Befestigung der auf das Beschickungstablett (12) aufgesetzten Sektoren und des in der Überführungsstation positionierten Sektors an dem Überführungsglied aufweist, sowie Mittel zum Anheben (92,94) und Verdrehen (102) des Überführungsgliedes.

4. Apparatur nach Anspruch 3, bei welcher die Mittel zum Anheben so ausgebildet sind, um das Überführungsglied zwischen einer untersten Stellung unterhalb der mehreren Stationen des Beschickungstabletts und einer obersten Stellung oberhalb der mehreren Stationen des Beschickungstabletts zu verstellen, und wobei die Mittel zum Verdrehen so ausgebildet sind, um das Überführungsglied in seiner obersten Stellung zwischen Indexpositionen zu verdrehen.

5. Apparatur nach Anspruch 3 oder Anspruch 4, bei welcher das Probenkarussell wenigstens teilweise kreisförmig ist und die Stationen jeweils Tragglieder (134) aufweisen, welche sich radial auswärts von dem Probenkarussell erstrecken und zur Aufnahme und Halterung der Sektoren ausgebildet sind, wobei Abstände (138) zwischen benachbarten Traggliedern vorgesehen sind; bei welcher des weiteren die Beschickungstablettstationen in Abständen um eine gemeinsame Mittelachse angeordnete Tragflächen (46) zur Aufnahme und Halterung der Sektoren aufweisen, wobei zwischen benachbarten Tragflächen Abstände definiert sind und der zwischen einer ersten und einer zweiten der genannten Tragflächen definierte Abstand, welcher der genannten Überführungsstation entspricht, relativ größer als die übrigen Abstände zwischen benachbarten Tragflächen ist; bei welcher des weiteren das Zentrum des Probenkarussells und die Mittelachse des Beschickungstabletts horizontal gegeneinander versetzt sind, derart daß die Tragglieder bei der Rotation des Karussells durch den der Überführungsstation entsprechenden Abstand hindurchwandern, wobei des weiteren das Überführungsglied mehrere Arme (118) von gleicher Zahl wie die Abstände zwischen benachbarten Tragflächen des Beschickungstabletts aufweisen, die sich in radialer Richtung, von der Mittelachse des Beschickungstabletts zwischen den genannten benachbarten Tragflächen erstrecken, wobei die Arme eine kleinere Breite als die Probenkarussell-Abstände und die Beschickungstablett-Abstände besitzen; und wobei die Mittel zum Anheben und zum Verdrehen Mittel zum Anheben der Arme durch die Abstände in eine Stellung oberhalb der auf dem Beschickungstablett angeordneten Sektoren aufweisen.

6. Apparatur nach Anspruch 3, Anspruch 4 oder Anspruch 5, bei welcher die Mittel zum Anheben und Rotieren des Überführungsgliedes einen Pneumatikkolben (70), einen zur Aufnahme des Kolbens ausgebildeten Zylinder (60) sowie eine Dichtung (78) zwischen diesen aufweisen.

7. Apparatur nach Anspruch 6, bei welcher die Mittel zum Anheben und Rotieren des Überführungsgliedes Mittel (92,94,96) zur Druckbeaufschlagung und zur Entlüftung des Zylinders umfassen.

8. Apparatur nach einem der Ansprüche 3 bis 7, bei welcher die Sektoren in diesen vorgesehene Ausnehmungen (42) aufweisen, und die Beschickungstablettstationen und die Probenkarussellstationen jeweils zur Aufnahme in diesen Ausnehmungen vorgesehene Vorsprünge (48,136) aufweisen.

9. Apparatur nach Anspruch 8, bei welcher das Probenüberführungsglied auch zur Aufnahme in den genannten Ausnehmungen ausgebildete Vorsprünge (120) aufweist.

10. Apparatur nach einem der Ansprüche 3 bis 8, des weiteren umfassend Mittel (106) zur Indexsteuerung der Verdrehung des Überführungsgliedes relativ bezüglich dem Beschickungstablett.

**Revendications**

1. Appareil de chargement et de déchargement d'échantillons pour être utilisé avec des moyens de transport d'échantillons chacun étant adapté pour transporter un ou plusieurs échantillons, l'appareil comprenant :

Un plateau de chargement (12) incluant une pluralité de localisations chacune adaptée à recevoir un moyen de transport d'échantillons (16) ; et

Un chariot à plateau tournant d'échantillons (14) disposé à proximité du plateau de chargement et incluant une pluralité de localisations chacune apte à recevoir un moyen de transport d'échantillons, la partie du chariot à plateau tournant d'échantillons à proximité du plateau de chargement définissant une position de transfert (18) ;

caractérisé en ce que ledit moyen de transport d'échantillons comprend un secteur de transport d'échantillons (16) apte à recevoir une pluralité d'échantillons et en ce que des moyens (20) sont prévus pour transférer un secteur de transport d'échantillons (16) positionné à la position de transfert (18) à partir du chariot à plateau tournant d'échantillons (14) vers le plateau de chargement (12) et pour transférer simultanément un secteur de transport d'échantillons (16) à partir du plateau de chargement (12) vers le chariot à plateau tournant d'échantillons (14) à la position de transfert (18).

2. Appareil selon la revendication 1, incluant en outre un moyen (128, 130, 132) pour supporter et entraîner en rotation la pluralité de localisations dans le chariot à plateau tournant d'échantillons .

3. Appareil selon la revendication 1 ou 2, dans lequel le moyen de transfert inclut un membre de transfert (20) comprenant un moyen (120) pour fixer de façon amovible les secteurs positionnés sur le plateau de chargement (12) et le secteur positionné à la position de transfert au membre de transfert et un moyen pour élever (92,94) et entraîner en rotation (102) le membre de transfert.

4. Appareil selon la revendication 3, dans lequel le moyen d'élévation est apte à déplacer le membre de transfert entre une position la plus basse sous la pluralité de localisations du plateau de chargement et une position la plus haute au dessus de la pluralité de localisations du plateau de chargement, et le moyen d'entraînement en rotation est apte à entraîner en rotation le membre de transfert entre les positions d'index lorsque le membre de transfert est dans sa position la plus élevée.

5. Appareil selon la revendication 3 ou 4 dans lequel le chariot à plateau tournant d'échantillons est au moins partiellement circulaire, et les localisations chacune inclut des membres de support (134), s'étendant radialement vers l'extérieur à partir du chariot à plateau tournant d'échantillons et aptes à recevoir et à supporter les secteurs, des espaces (138) étant définis entre les membres de supports voisins ; dans lequel les localisations du plateau de chargement incluent des surfaces de support (46), espacées autour d'un axe central commun et apte à recevoir et à supporter les secteurs, les espaces étant définis entre les surfaces de support voisines et l'espace défini entre une première et une seconde desdites surfaces de support correspondant à ladite position de transfert et étant relativement plus grand que le reste des espaces entre les surfaces de support voisines ; dans lequel le centre du chariot à plateau tournant d'échantillons et l'axe central du plateau de chargement sont déplacés horizontalement l'un de l'autre de sorte que les membres de support passent à travers ledit espace correspondant à la position de transfert alors que le chariot au plateau tournant tourne ; dans lequel le membre de transfert inclut une pluralité des bras (118) égaux en nombre aux espaces entre les surfaces de support voisines du plateau de chargement et s'étendant radialement à partir de l'axe central du plateau de chargement entre lesdites surfaces de support voisines, les bras étant plus petits en largeur que les espaces de chariot à plateau tournant d'échantillons et les espaces de plateau de chargement ; et dans lequel, le moyen d'élévation et d'entraînement en rotation inclut un moyen pour élever les bras à travers les espaces vers une position au dessus des secteurs installés sur le plateau de chargement.

6. Appareil selon la revendication 3, 4 ou 5, dans lequel le moyen pour élever et entraîner en rotation le membre de transfert inclut un piston pneumatique (70), un cylindre (60) apte à recevoir le piston, et un joint (78) entre.

7. Appareil selon la revendication 6, dans lequel le moyen pour élever et entraîner en rotation le membre le transfert inclut un moyen (92,94,96) pour préssuriser et dépréssuriser le cylindre.

8. Appareil selon l'une quelconque des revendications 3 à 7, dans lequel les secteurs incluent des évidements (42) formés à l'intérieur et les localisations de plateau de chargement et les localisations du chariot à plateau tournant d'échantillons chacune incluent des éléments en saillies (48, 136) aptes à être reçus par de tels évidements.

9. Appareil selon la revendication 8, dans lequel le membre de transfert d'échantillons inclut également des éléments en saillies (120) aptes à être reçus par lesdits évidements.

10. Appareil selon une quelconque des revendications 3 à 8 incluant en outre un moyen (106) pour indexer la rotation du membre de transfert par rapport au plateau de chargement.

FIG. 1

FIG. 2

9